(19) Europäisches Patentamt
European Patent Office
Office européen des brevets

(11) EP 2 853 993 A1

(12) EUROPEAN PATENT APPLICATION

(43) Date of publication:
01.04.2015 Bulletin 2015/14

(51) Int Cl.:
G06F 3/041 (2006.01)          G06F 3/044 (2006.01)
H04B 5/00 (2006.01)          G06F 3/039 (2013.01)

(21) Application number: 13306315.6

(22) Date of filing: 26.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Gemalto SA
92190 Meudon (FR)

(72) Inventors:
• Normend, Yoan
  92190 Meudon (FR)
• Antoine, Matthieu
  92190 Meudon (FR)

(74) Representative: Cour, Pierre
Gemalto SA
Intellectual Property Department
6, rue de la Verrerie
92190 Meudon (FR)

(54) **Method for encoding a data stream and transmitting a sequence of events between a first device and a second device comprising a capacitive touchscreen**

(57) The method for transmitting a data stream from a first device (40) able to emulate touch and touch release on a touchscreen (31) of a second device (30). The touchscreen state is switching between two different states by a generation of a modification of the capacitive state of at least a first area of the touchscreen, the method comprises:

• generating a sequence of touches (TS) and touch releases (R) defining a sequence of state transitions, a first value of bit being encoded by a first duration ($t_a$) defined between two state transitions and a second value of bit being encoded by a second duration ($t_b$) defined between two state transitions ;

• generating a sequence of events in the second device (30),;

• retrieving a bit stream by analyzing each measured duration by the second device between two successive events of the sequence of events.

FIG.5A

# EP 2 853 993 A1

**Description**

**Technical field**

This invention involves the methods for encoding a data stream which is transmitted from a first device to a second device through a capacitive touchscreen, as for example a smartphone or a tablet.

**Background technology**

Currently, many ways permit to establish communications between two devices using different interfaces available on the market.

The need to interconnect electronic devices in order to transfer data is increasing. Many solutions are based on the use of communication protocols or standards.

One inconvenience is resulting from the various means to interface devices together, in particular tablets and mobile phones. These means are heterogeneous and are using more and more proprietary connectors or protocols.

A way to deal with this issue is to use a common interface to all these devices and having homogeneous capabilities widely shared among them.

Some solutions allow activating a capacitive touchscreen by an actuator from a first device. These solutions suffer from a lack of definition of an efficient coding allowing the data transmission through capacitive touch screens. On the one hand, the need to establish an asynchronous link between two devices and on the other hand, the diversity of architectures facilities including a touch screen makes it difficult to implement a solution of efficient coding.

**Summary**

The invention overcomes the aforementioned disadvantages.

It is an object of the invention to describe a method for transmitting a data stream from a first device able to emulate touch and touch release on a touchscreen of a second device, in which the touch screen state is switching between two different states by a generation of a modification of the capacitive state of at least a first area of the touchscreen.

The method comprises:

- generating a sequence of touches and touch releases defining a sequence of state transitions of the first area of the touchscreen, a first value of bit being encoded by a first duration defined between two state transitions and a second value of bit being encoded by a second duration defined between two state transitions ;
- generating a sequence of events raised in the second device, each event corresponding to the detection of a state transition of the first area of the touchscreen ;
- retrieving a bit stream by analyzing each measured duration by the second device between two successive events of the sequence of events.

This solution allows defining interoperability between two devices through the touch screen without implying a specific connection for transmitting a data stream.

In one embodiment, the method comprises:

- discriminating the sequence of measured durations by comparing each measured duration of the sequence with a predefined threshold, the predefined threshold being defined in order to discriminate the measured duration corresponding to a first duration or a second duration.

This solution allows configuring the threshold with the definition of the first and the second durations.

In one embodiment, the detection of state transitions allowing the generation of events is realized by sampling at a scanning period the capacitive state of the first area of the touchscreen.

In one embodiment, the first device is able to emulate simultaneously different sequences of touches and touch releases on a set of different areas of the touchscreen of the second device.

In one embodiment, the first duration is greater than the scanning period. This solution ensures an efficient coding by analysing the sequence of events generated.

In one embodiment, the first duration is equal or less than twice the scanning period.

In one embodiment, the second duration is equal or more than twice the scanning period value. This solution ensures a better detection of the modification of the capacitive state of the touchscreen of the second device.

In one embodiment, the second duration is equal or more than three times the scanning period.

One advantage of the invention is to optimize the recognition of a data bits sequence. This relation between the first duration and the second duration of a data bit ensure that objective.

In one embodiment, the method comprises a preliminary step comprising transmitting the scanning period from the second device to the first device.

In one embodiment, transmitting the scanning period from the second device comprises a detection of the presence of a first device set on the touchscreen.

In one embodiment, transmitting the scanning period from the second device to the first device comprises generating a flashing of an area of the touchscreen at the scanning frequency.

The method comprises calculating the first duration and the second duration by the first device according to the value of scanning period received from the second device, ensuring that the first duration is greater than the scanning period.

In another embodiment, the method comprises a preliminary step comprising:

- calculating the first duration by the first device after receiving the scanning period;
- calculating the first duration by the first device after receiving the scanning period ;
- encoding a data bit sequence into a sequence of touches and touch releases, two successive state transitions being generated each first or each second duration.

It is another object of the invention to describe a device, call first device, for transmitting a data stream to a second device. The first device comprises at least one actuator able to emulate a sequence of touches and touch releases on a capacitive touchscreen of a second device, the actuator being controlled by a calculator, a sequence of touches and touch releases defining a sequence of state transitions on an area of the touchscreen of the second device, a first value of bit being encoded by a first duration defined between two state transitions and a second value of bit being encoded by a second duration defined between two state transitions.

In one embodiment, the first device comprises a light sensor able to retrieve the frequency of a flashing light emitted by the second device.

In one embodiment, the first device comprises a calculator able to calculate the first duration and the second duration depending of the value of the frequency of a flashing light retrieved.

**Brief description of the drawings**

These and other aspects of the invention will be apparent from and elucidated with reference to the embodiments described hereafter with reference being made to the drawings in which:

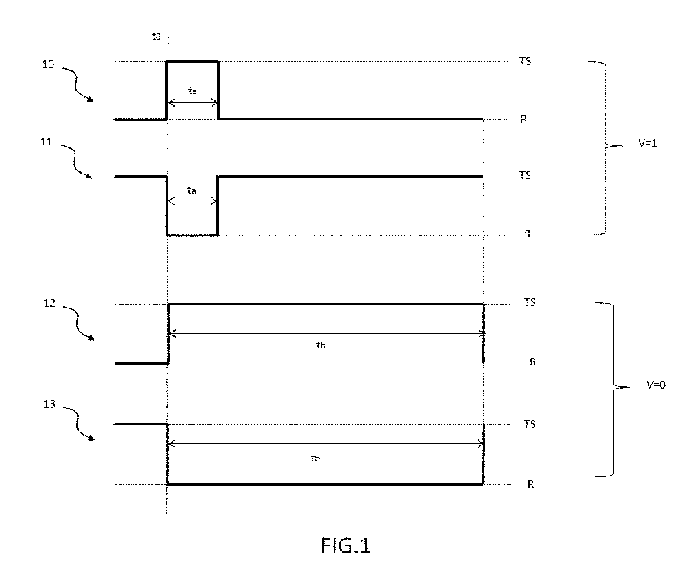

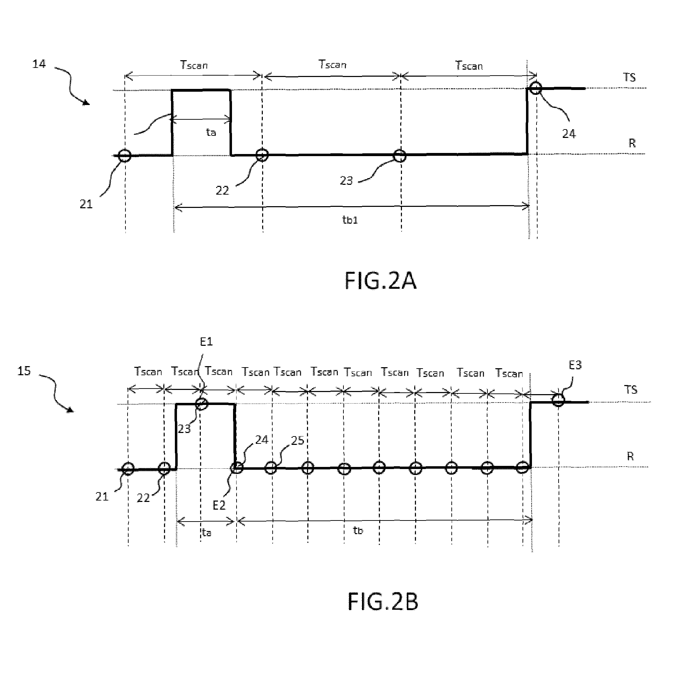

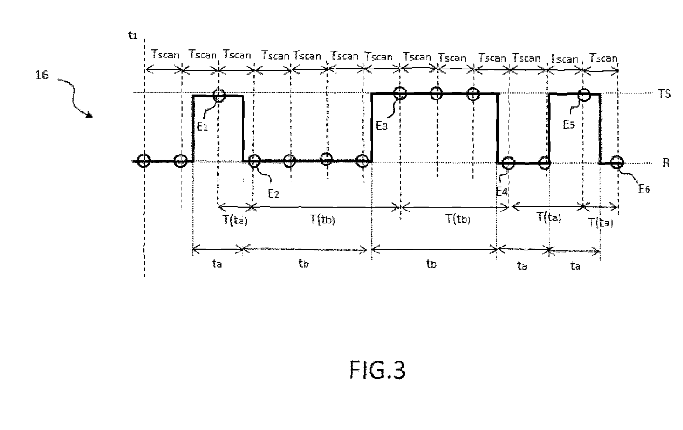

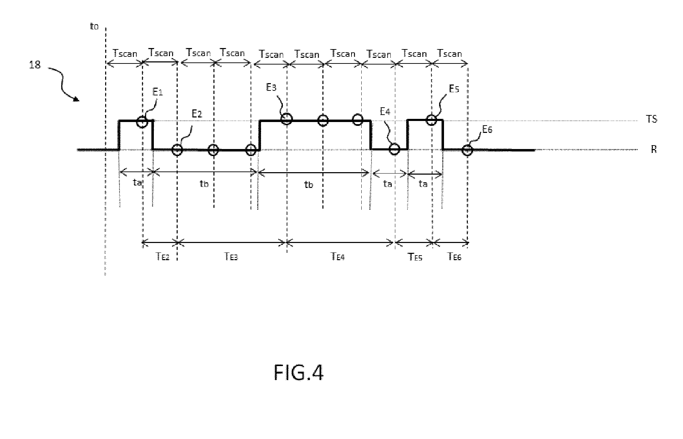

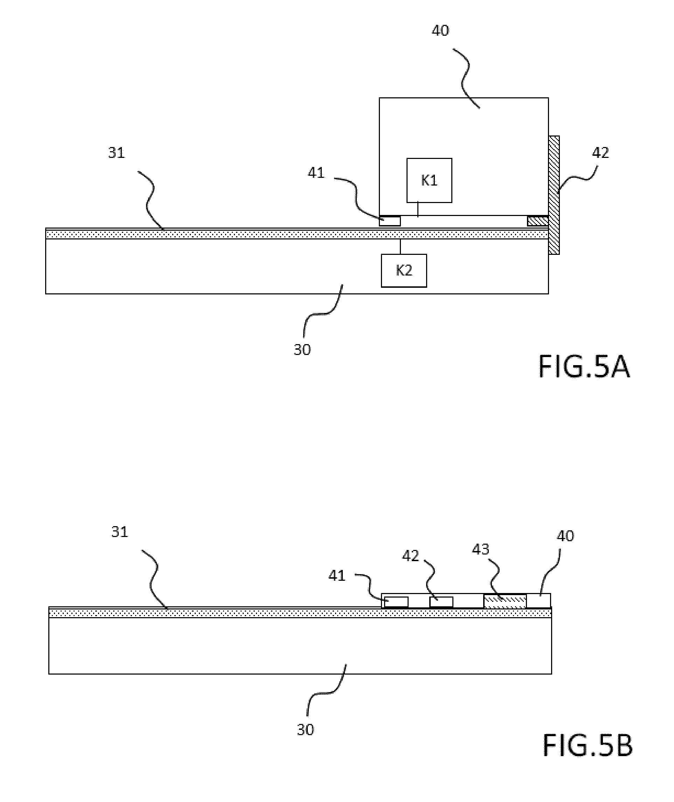

■ figure 1 : illustrates an encoding of a data bit by a the definition of a sequence of touches and touch releases ;
■ figures 2A, 2B : illustrates the definition of parameters of the encoding scheme depending of a scanning period of the device having a touchscreen ;
■ figures 3 : illustrates an example of a sequence of events generated by a second device according to the method of invention;
■ figure 4 : illustrates another example of a sequence of events generated by a second device where the first duration and the second duration are a multiple of the scanning period according to the method of invention;
■ figure 5 : illustrates two embodiments of a first and second devices according to the invention

**Detailed description**

A modification of the capacitive state on a touch screen detected by the second device raises an event. An event is meaningful only for the second device.

In the invention, an event is at least a touch, where something (a finger, an object, etc.) touches the touchscreen, and a touch release, where something (a finger, an object, etc.) which is already touching the touchscreen leaves this touchscreen. In the present description, an event is raised by the second device when a modification of the capacitive state of the screen of the second device is detected.

A touch or a touch release received on the screen of the second device may be emulated by the first device. The touch and the touch release generate a modification of the capacitive state of an area of the touchscreen.

Figure 1 illustrates an encoding scheme according to the invention which defines different sequences of touches and touches releases. Each sequence 10, 11, 12 and 13 illustrates a coding sequence of a data bit.

In one embodiment, a touch on a capacitive touchscreen of a second device is noted in the figure 1: "TS". A touch release on the capacitive touchscreen of a second device is noted in the figure 1: "R". The touch TS and the touch release R may be activated by an actuator of a first device. The actuator can be for example a plate drove to a potential corresponding to the touch or to the touch release. The first device may be placed on an area of the touchscreen of the second device in such a way that the actuator is in contact with the screen.

Given that the defined coding scheme implies the possibility of different capacitive state between the beginning and the end of a bit, two scenarios shall be defined for each bit value:

- sequences 10 and 11 for the first value ;
- sequences 12 and 13 for the second value.

Two parameters are represented in figure 1. The first parameter is noted $t_a$ and represents a first duration between two state transitions of the touchscreen of the second device. The state transitions may occur on a predefined area of the touchscreen. The first duration is defined between two successive states transitions. The method of the invention ensures to not miss any state transitions at the detection level in the second device.

Each duration $t_a$ and $t_b$ is affected to a bit value 1 or 0. The first bit value ('1' or '0', depending on the implementation) is encoded, for instance, with the first duration.

In the sequence 10, a touch TS occurs at $t_0$ and a touch released R occurs at $t_0+t_a$. In the sequence 11, a touch release R occurs at $t_0$ and a touch TS occurs at $t_0+t_a$. $t_a$ represents the first duration and corresponds for instance to a first bit value.

The second parameter is noted $t_b$ and represents a second duration between two state transitions of the touchscreen. A second bit value ('0' or '1' depending on the implementation), corresponds to the second duration.

In one embodiment, in the sequences 10 and 11, the value V of the transmitted bit is set to "1" (V=1). When this sequence is received by the second device, it reads a value equal to "1" of the transmitted bit.

In another embodiment, the value V of the transmitted bit in sequence 10 and 11 may be set to "0" (V=0).

In the sequence of touches and touch releases 12 represented in figure 1, the sequence comprises a touch at $t_0$ and a touch release R occurs at $t_0+t_b$. $t_b$ represents the duration between the two state transitions of the touchscreen of the second device. The touch occurring at $t_0$ is a continuous touch maintained during the period $t_b$.

In the sequence of touches and touch releases 13, the sequence comprises a touch release starting at $t_0$ and maintained until $t_0+t_b$. A touch occurs at $t_0+t_b$.

In the sequences 12 and 13, the value of the transmitted bit is set to "0" (V=0). When this sequence is received, the second device reads a value equal to "0" of the transmitted bit.

In another embodiment, the value V of the transmitted bit in the sequences 12 and 13 may be set to "1 (V=1) especially when the sequences 10 and 11 represent a value of a transmitted bit set to "0" (V=0).

Both parameters $t_a$ and $t_b$ are defined in the first device.

The method of the invention allows defining a data bit transmission depending of a sequence of touches and touch releases and the durations of the first and the second parameters. The configuration of the first and second parameters may be used for optimizing data rate between the first and the second devices, improving discrimination of the data received.

The second device comprising a touchscreen has a scanning function allowing determining periodically each event occurring on the touchscreen. A capacitive matrix on the screen may be coupled to a calculator in order to activate the scanning function periodically. In one example the scanning frequency is comprised in the range [25Hz; 65Hz]. For instance a possible value may be substantially equal to 30 Hz.

In order to get all the happening events as touch, touch release, slide, pinch, etc. the second device scans periodically the screen to measure a possible change in local capacitance.

Each point is scanned once per period. The period is called here $T_{scan}$. This parameter is defined by the manufacturer of the second device. When a change is detected during a scan, a calculator of the second device raises an event containing some information among which the event type, a position on the screen and a timestamp. The event may be generated at the hardware level and/or at the application level depending of the second device.

In one embodiment, there is no way to poll the screen state. Events can only be raised if a modification is detected during a scan. If there is no modification, no information is sent. The events are raised in real time during the acquisition of data bit transmission by the second device, each event comprising a timestamp.

In the method for encoding data of the invention, the data coding and the transmission of such data between the first device and the second device is based on an asynchronous communication.

Each sequence defined in figure 1 according to the invention comprises a touch or a touch release at the beginning of each bit to transmit. Each transmitted bit is sent during a first period $t_a$ or a second period $t_b$ depending of the data bit sequence to send. The measures of the event timestamps at the second device level allow retrieve the sequence of data bit.

To distinguish a value '0' from a value '1' at the receiver level, it means from the second device point of view, it is needed to figure out the time between two consecutive events. In order to achieve this in a reliable way, parameters $t_a$ and $t_b$ shall be constrained. The method of the invention allows defining relations between these parameters and with the scanning period $T_{scan}$ of the second device.

Figure 2A represents a first sequence 14 of touches and touch releases comprising a touch TS and a touch released R which succeeds to the touch TS. The two first state transitions are spaced of the duration $t_a$ as defined in figure 1.

The second device is able to scan the capacitive state on its touchscreen every $T_{scan}$ period thanks to a calculator. The calculator polls the screen state periodically every moment 21, 22, 23, 24. If the result of this polling is different from the previous one, an event is raised in the second device.

Figure 2A represents a case where $T_{scan}$ exceeds the first duration of $t_a$. We have the following relation:

- 

$$T_{scan} > t_a$$

Owing to the way a capacitive touchscreen works, the two first actions do not raise an event in the second device:

■

$$S(21) = R$$

■

$$S(22) = R$$

■

$$S(23) = R$$

■

$$S(24) = TS$$

t -> S(t) is the function giving the capacitive state of the touchscreen at different period given by the scanning period.

There is only one event raised at 24 because there is a modification on the touchscreen.

The communication between the two devices being asynchronous, in such configuration, the second device may miss the event corresponding to a touch TS being activated continuously during $t_a$, as it is represented in figure 2A.

This explains why $t_a$ should verify the following relation:

- 

$$T_{scan} < t_a$$

The same explanation could be applied for a touch release.

In figure 2B a second sequence 15 of touches and touch releases from the first device is represented. $t_a$ is defined, or reciprocally $T_{scan}$, in order to obtain the following relation:

- 

$$T_{scan} < t_a$$

The method of the invention allows determining a period $t_a$ long enough to raise an event in the second device as a touch TS if the sequence is a transmitted sequence 10 or a touch released R is the sequence is a transmitted sequence 11.

The method is based on relative timings between events. To get these timings, timestamps from events need to be analyzed.

The touch maintained during $t_a$ seconds by the first device will raise two events in the second device:

■

$$\text{Timestamp}(\text{E1}) = x$$

■

$$\text{Timestamp}(\text{E2}) = x + T_{scan}$$

So the duration seen by the second device of the first duration $t_a$ is:

■

$$T(t_a) = T_{E2} = \text{Timestamp}(E_2) - \text{Timestamp}(E_1) = T_{scan}$$

$i \rightarrow T_{Ei}$ is a function giving the time interval after detecting two successive events: $E_i$ and $E_{i-1}$ at the second device level. The time interval is defined by the duration between two timestamps of both successive events generated by the second device.

At the receiver level, the calculation of $T_{Ei+1}$ allows comparing the result with a predefined threshold which enables determining if the duration of the received bit is closer from $t_a$ or $t_b$.

It means that the touch which lasts $t_a$ for the first device will be seen as a touch which lasts $T_{scan}$ for the second device.

The same interpretation can be done for $t_b$:

■

$$\text{Timestamp}(E_2) = x + T_{scan}$$

■

$$\text{Timestamp}(E_3) = x + 10*T_{scan}$$

So the duration seen by the second device is:

■

$$T(t_b) = \text{Timestamp}(E_3) - \text{Timestamp}(E_2) = 9*T_{scan}$$

It means that the bit which lasts $t_b$ for the first device will be seen as a touch which lasts $9*T_{scan}$.

In all cases, a duration seen by the second device will always be a multiple of $T_{scan}$. The first and the second durations $t_a$, $t_b$ defined in the first device are seen by the second device as multiples of $T_{scan}$.

To ensure a correct discrimination between '1' and '0', a relation between $t_a$ and $t_b$ shall be established. Parameters $t_a$ and $t_b$ can be written like the following:

■

$$t_a = r_a * T_{scan} + q_a$$

■

$$t_b = r_b{}^*T_{scan} + q_b$$

Where $r_a$ and $r_b$ are integers strictly positive because $t_a > T_{scan}$ and $t_b > T_{scan}$ and where $q_a$ and $q_b$ are belonging to $[0 ; T_{scan}[$.

The following inequalities come:

■

$$r_a{}^*T_{scan} \leq T(t_a) \leq (r_a+1)^*T_{scan}$$

■

$$r_b{}^*T_{scan} \leq T(t_b) \leq (r_b+1)^*T_{scan}$$

According to a configuration of the method of the invention, a correct discrimination of the data bit sequence received by the second device is possible if the following relation is verified:

■

$$T(t_a) < T(t_b)$$

The relation above leads to the following constraint between $t_a$ and $t_b$:

■

$$r_b > r_a + 1$$

A figure 3 illustrates a sequence 16 received by the second device. At each $T_{scan}$, a calculator of the second device allows scanning the state of the screen. When a change (i.e. modification of the state of the screen) is detected an event is raised. The sequence 16 shows 5 events raised after receiving the sequence of touches and touch releases.

Events $E_1$, $E_2$, $E_3$, $E_4$, $E_5$ and $E_6$ are noted on figure 3.

When the event $E_2$ is raised, the calculator of the second device is able to determinate a first timestamp: $T_{E2}$.

When E2 is raised, a modification of the state of the screen is detected.

■

$$T_{E2} = Timestamp(E_2) - Timestamp(E_1) = 1^*T_{scan}$$

The same calculation may be applied at each event $E_2$, $E_3$, $E_4$, $E_5$:

■

$$T_{E3} = Timestamp(E_3) - Timestamp(E_2) = 4^*Tscan \;$$

■

$$T_{E4} = Timestamp(E_4) - Timestamp(E_3) = 3*Tscan \; ;$$

∎

$$T_{E5} = Timestamp(E_5) - Timestamp(E_4) = 2*Tscan \; ;$$

∎

$$T_{E6} = Timestamp(E_6) - Timestamp(E_5) = 1*Tscan \; ;$$

In that example,

∎

$$t_a = 1*T_{scan} + q_a, \text{ where } r_a = 1;$$

∎

$$t_b = 3*T_{scan} + q_b, \text{ where } r_b = 3.$$

The example of figure 3 is consistent with the requirements of the method of the invention. The following relation is verified:

∎

$$r_b = 3 > r_a + 1 = 2$$

Figure 4 illustrates an example of a sequence 18 where:

∎

$$t_a = 1*T_{scan};$$

∎

$$t_b = 3*T_{scan}$$

The sequence 18 shows:

∎ the sequence of touches and touch releases generated by the first device by representing the first and the second durations $t_a$ and $t_b$;
∎ the sequence of events generated by the second device by representing the events $E_1$, $E_2$, $E_3$, $E_4$, $E_5$, $E_6$ and the associated timestamps defining the duration $T_{Ei}$, $i \in [1, 6]$
∎ the modification of states TS and R of an area of the touchscreen of the second device.

For better understanding, the sequence 18 begins at $t_0$ and the scanning frequency is represented in the sequence 18.

This configuration allows defining an interval of time between two timestamps of two successive events equal either to the first duration either to the second duration.

In one embodiment, a preliminary step of the method allows the first device to retrieve the scanning period $T_{scan}$ or the scanning frequency $1/T_{scan}$ from the second device. Once the scanning period $T_{scan}$ was acquired by the first device, the said first device may adapt and configure the value of the first duration $t_a$ and the second duration $t_b$ in order to optimize the data transmission between the first device and the second device.

An advantage of this solution is to ensure an adaptable and flexible solution which may be used independently of the technology used by the touchscreen of the second device. Indeed, the scanning frequency of capacitive matrix may be different from a device to another.

In one embodiment, the scanning frequency may be sent from the second device to the first device by:

- an operator action on the second device or ;
- an automatic detection of the presence of the first device arranged on the surface of the screen of the second device;
- after receiving a request from the first device.

The scanning period may be sent by any interface of the second device: audio signal, light emitter, wifi, Bluetooth.

In a specific embodiment, the scanning period is sent by generating a flashing by the calculator of the second device and transmitted by the screen of the said second device. The flashing is set to the frequency of the scanning frequency in order to allow the first device acquire the frequency value of the flashing.

In another embodiment, the values of $t_a$ and $t_b$ may be configured to be compliant according to a predefined scanning period during a predefined duration at the beginning of the communication between both devices. The predefined scanning period may be chosen in order to be a large enough period to work with all possible devices.

Then the scanning frequency may be adapted during the transmission between both devices in order to improve data rate transmission.

The invention concerns a device, call first device, for transmitting a sequence of events, the events being generated according to the method of the invention, the device comprising an actuator allowing the emulation of a touch on a capacitive touchscreen. The first device comprises also a surface intended to cooperate with an area of a touchscreen for activating the actuator on the area. The first device may comprise a calculator and a screen.

Figure 5A illustrates a first device 40 comprising a calculator K1 and actuator 41. The actuator 41 allows generating a sequence of touches and touch releases on the touchscreen of the second device 30. The calculator K1 allows encoding the bit stream sequence and piloting the actuator 41.

The second device 30 comprises a calculator K2 and a touchscreen 31. The touchscreen 31 is able to manage modifications of the capacitive state of at least a first area. The first area may be the whole surface of the touchscreen or a part of the touchscreen. The second device 30 generates a sequence of events, each event corresponding to the detection of a state transition of the first area of the touchscreen. The second device 30 comprises a calculator K2 able to retrieve the transmitted bit sequence from the first device by analyzing the measured duration between two successive events generated.

Both first and second devices may be paired mechanically by positioning mean 42. The positioning mean 42 allows the actuator of the first device to transmit a sequence of touches and touch releases in the same area. The advantage is to stabilize both devices during the transmission.

The figure 5B illustrates a first device 40 as a smart card comprising a first actuator 41. In an embodiment the first device may comprise a set of actuators 41, 42. In one embodiment, the first device is able to emulate simultaneously different sequences of touches and touch releases with different actuators on a set of different areas of the touchscreen 31 of the second device 30.

In another embodiment, the first device 40 comprises a light sensor 43 for receiving a flashing light. The second device is able to generate a flashing of an area of the touchscreen at the scanning frequency. The first device 40 is capable to detect the frequency of the flashing light and to retrieve the scanning period.

**Claims**

1. Method for transmitting a data stream from a first device (40) able to emulate touch (TS) and touch release (R) on a touchscreen (31) of a second device (30), **characterized in that** the touchscreen state is switching between two different states by a generation of a modification of the capacitive state of at least a first area of the touch screen, and **in that** the method comprises:

    • generating a sequence of touches (TS) and touch releases (R) defining a sequence of state transitions of the first area of the touchscreen, a first value of bit being encoded by a first duration ($t_a$) defined between two state transitions and a second value of bit being encoded by a second duration ($t_b$) defined between two state transitions ;
• generating a sequence of events ($E_1$, $E_2$, $E_3$, $E_4$, $E_5$, $E_6$) raised in the second device (30), each event corresponding to the detection of a state transition of the first area of the touchscreen ;
• retrieving a bit stream by analyzing each measured duration by the second device between two successive events ($E_1$, $E_2$, $E_3$, $E_4$, $E_5$, $E_6$) of the sequence of events.

2.  Method for transmitting a data stream according to claim 1, wherein the method comprises :

    • discriminating the sequence of measured durations by comparing each measured duration of the sequence with a predefined threshold, the predefined threshold being defined in order to discriminate the measured duration corresponding to a first duration ($t_a$) or a second duration ($t_b$).

3.  Method for transmitting a data stream according to claim 1 or 2, wherein the detection of state transitions allowing the generation of events is realized by sampling at a scanning period ($T_{scan}$) the capacitive state of the first area of the touchscreen (31).

4.  Method for transmitting a data stream according to any of claims 1 to 3, wherein the first device (40) is able to emulate simultaneously different sequences of touches (TS) and touch releases (R) on a set of different areas of the touchscreen (31) of the second device (30).

5.  Method for transmitting a data stream according to claim 3 or 4, wherein the first duration ($t_a$) is greater than or equal to the scanning period ($T_{scan}$).

6.  Method for transmitting a data stream according to any of claims 3 to 5, wherein the first duration ($t_a$) is equal to or less than twice the scanning period ($T_{scan}$) value.

7.  Method for transmitting a data stream according to any of claims 3 to 6, wherein the second duration ($t_b$) is equal to or more than twice the scanning period ($T_{scan}$) value.

8.  Method for transmitting a data stream according to any of claims 3 to 7, wherein the second duration ($t_b$) is equal to or more than three times the scanning period ($T_{scan}$) value.

9.  Method for transmitting a data stream according to any of claims 3 to 8, wherein the method comprises a preliminary step comprising transmitting the scanning period ($T_{scan}$) from the second device (30) to the first device (40).

10. Method for transmitting a data stream according to claim 9, wherein transmitting the scanning period ($T_{scan}$) from the second device (30) comprises a detection of the presence of a first device (40) set on the touchscreen (31).

11. Method for transmitting a data stream according to claim 9 or 10, wherein transmitting the scanning period ($T_{scan}$) from the second device comprises generating a flashing of an area of the touchscreen at the scanning frequency ($T_{scan}$).

12. Method for transmitting a data stream according to any of claims 9 to 11, wherein the method comprises calculating the first duration ($t_a$) and the second duration ($t_b$) by the first device according to the value of scanning period ($T_{scan}$) received from the second device, ensuring that the first duration ($t_a$) is greater than the scanning period ($T_{scan}$).

13. Method for transmitting a data stream according to any of claims 9 to 12, wherein the method comprises a preliminary step comprising :

    • calculating the first duration ($t_a$) by the first device after receiving the scanning period ($T_{scan}$) ;
    • calculating the first duration ($t_b$) by the first device after receiving the scanning period ($T_{scan}$) ;
    • encoding a data bit sequence into a sequence of touches and touch releases, two successive state transitions being generated each first or each second duration.

14. Device (40) for transmitting a data stream to a second device (30), **characterized in that** the device comprises at least one actuator able to emulate a sequence of touches (TS) and touch releases (R) on a capacitive touchscreen (31) of a second device (30), the actuator being controlled by a calculator (K1), a sequence of touches (TS) and touch releases (R) defining a sequence of state transitions on an area of the touchscreen of the second device, a first value of bit being encoded by a first duration ($t_a$) defined between two state transitions and a second value of bit being encoded by a second duration ($t_b$) defined between two state transitions.

15. Device (40) according to claim 14, wherein the device comprises a light sensor (43) able to retrieve the frequency of a flashing light emitted by the second device (30).

16. Device (40) according to claim 14, wherein the device (40) comprises a calculator ($K_1$) able to calculate the first duration ($t_a$) and the second duration ($t_b$) depending of the value of the frequency of a flashing light retrieved.

17. Device (30) according to claim 14, wherein the device comprises a touchscreen (31) able to switching between two different states when a modification of the capacitive state occurred in at least a first area of the touchscreen, a sequence of modifications of the capacitive state allowing the generation of a sequence of events ($E_1$, $E_2$, $E_3$, $E_4$, $E_5$, $E_6$), each event corresponding to the detection of a state transition of the first area of the touchscreen, the device (40) comprising a calculator ($K_2$) for retrieving a bit stream by analyzing each measured duration between two successive events of the sequence of events.

FIG.1

FIG.2A

FIG.2B

FIG.3

FIG.4

40

31

42

41

K1

K2

30

FIG.5A

31

41    42    43    40

30

FIG.5B

Europäisches
Patentamt
European
Patent Office
Office européen
des brevets

# EUROPEAN SEARCH REPORT

Application Number

EP 13 30 6315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/304583 A1 (KRUGLICK EZEKIEL [US]) 15 December 2011 (2011-12-15) | 1-10,13, 14,17 | INV. G06F3/041 |
| Y | * abstract; claim 17; figures 1-7 * | 11,15 | G06F3/044 |
| A | * paragraphs [0017], [0018], [0031] - [0046] * | 12,16 | H04B5/00 G06F3/039 |
| Y | US 2013/120291 A1 (BAENTSCH MICHAEL [CH] ET AL) 16 May 2013 (2013-05-16) * abstract; figures 1-6 * * paragraphs [0002], [0030], [0034] - [0051], [0060] - [0063], [0073] - [0080], [0104] - [0110], [0119], [0120] * | 11,15 | |
| A | US 2010/277435 A1 (HAN KUK-HYUN [KR] ET AL) 4 November 2010 (2010-11-04) * abstract; figures 1-11 * * paragraphs [0109] - [0120] * | 9,10 | |
| A | WO 2013/037599 A1 (GEMALTO SA [FR]; MARSEILLE FRANCOIS-XAVIER [FR]; DURAND STEPHANE [FR]) 21 March 2013 (2013-03-21) * abstract; figures 1-3 * * page 1, lines 6-26 * * page 3, lines 16-17 * | 1,2,14 | |

TECHNICAL FIELDS
SEARCHED        (IPC)

G06F
H04B

The present search report has been drawn up for all claims

| Place of search | Date of completion of the search | Examiner |
|---|---|---|
| Munich | 18 February 2014 | Köhn, Andreas |

EPO FORM 1503 03.82 (P04C01)

## ANNEX TO THE EUROPEAN SEARCH REPORT
## ON EUROPEAN PATENT APPLICATION NO.

EP 13 30 6315

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2014

| Patent document cited in search report | | Publication date | Patent family member(s) | | Publication date |
|---|---|---|---|---|---|
| US 2011304583 | A1 | 15-12-2011 | CN | 102725717 A | 10-10-2012 |
| | | | JP | 2013527510 A | 27-06-2013 |
| | | | KR | 20120102744 A | 18-09-2012 |
| | | | US | 2011304583 A1 | 15-12-2011 |
| | | | WO | 2011155939 A1 | 15-12-2011 |
| US 2013120291 | A1 | 16-05-2013 | US | 2013120291 A1 | 16-05-2013 |
| | | | WO | 2013068863 A1 | 16-05-2013 |
| US 2010277435 | A1 | 04-11-2010 | NONE | | |
| WO 2013037599 | A1 | 21-03-2013 | EP | 2571216 A1 | 20-03-2013 |
| | | | WO | 2013037599 A1 | 21-03-2013 |

EPO FORM P0459

For more details about this annex : see Official Journal of the European Patent Office, No. 12/82